# EUROPÄISCHE PATENTSCHRIFT

(11) **EP 3 922 525 B1**
(45) Veröffentlichungstag und Bekanntmachung des Hinweises auf die Patenterteilung: **13.12.2023**
(21) Anmeldenummer: 21188251.9
(22) Anmeldetag: 20.06.2015
(51) Int. Cl.: B60W 30/14, B60K 31/00

(54) **VERFAHREN ZUR BEGRENZUNG EINER GESCHWINDIGKEIT EINES NUTZFAHRZEUGS UND GESCHWINDIGKEITSBEGRENZUNGSEINRICHTUNG**
METHOD FOR LIMITING A SPEED OF A COMMERCIAL VEHICLE AND SPEED RESTRICTION DEVICE
PROCÉDÉ DE LIMITATION DE VITESSE D'UN VÉHICULE UTILITAIRE ET DISPOSITIF DE LIMITATION DE VITESSE

(30) Priorität: 16.10.2014 DE 102014015261
(43) Veröffentlichungstag der Anmeldung: 15.12.2021
(62) Teilanmeldung aus: 15001832.3
(73) Patentinhaber: MAN Truck & Bus SE, 80995 München (DE)
(72) Erfinder: Weller, Ralf, 80638 München (DE)
(74) Vertreter: v. Bezold & Partner Patentanwälte - PartG mbB

(56) Entgegenhaltungen:
- WO-A1-2013/191614
- WO-A1-2014/045020
- WO-A1-2014/149043
- DE-A1-102005 052 032
- DE-A1-102011 113 909
- KR-A- 20080 073 831

## Beschreibung

Die Erfindung betrifft ein Verfahren zur Begrenzung einer Geschwindigkeit eines Nutzfahrzeugs im Fahrpedalbetrieb mit einer Geschwindigkeitsbegrenzungseinrichtung. Die Erfindung betrifft ferner eine derartige Geschwindigkeitsbegrenzungseinrichtung.

Moderne, insbesondere im Fernverkehr eingesetzte Nutzfahrzeuge, sind mit einer Geschwindigkeitsregelanlage ausgestattet, die zwei unabhängig voneinander arbeitende Geschwindigkeitsregler umfasst. Ein erster Regler (auch Fahrgeschwindigkeitsregler, Tempopilot oder Tempomat genannt) regelt über den Antriebsstrang, beispielsweise über die Kraftstoffzufuhr im Motor, die Geschwindigkeit des Fahrzeugs auf eine erste Sollgeschwindigkeit. Ein zweiter Regler (auch Bremsgeschwindigkeitsregler oder Bremsomat genannt) regelt über eine Bremseinrichtung des Fahrzeugs die Fahrzeuggeschwindigkeit so, dass eine zweite Sollgeschwindigkeit, die über der vorstehend genannten ersten Sollgeschwindigkeit des ersten Reglers liegt, nicht überschritten wird. Dadurch kann verhindert werden, dass Fahrzeuge, insbesondere schwere Nutzfahrzeuge, bei Fahrten auf Gefällestrecken auch ohne Kraftstoffzufuhr, d. h. im nicht befeuerten Betrieb, durch den Hangabtrieb zu weit über die Wunschgeschwindigkeit (erste Sollgeschwindigkeit) hinaus beschleunigen. Vorzugsweise stellt der Bremsgeschwindigkeitsregler das Einhalten der zweiten Sollgeschwindigkeit mittels einer verschleißfreien Dauerbremse (auch als geregelte Dauerbremse bezeichnet) sicher und nicht mittels der normalen Betriebsbremse.

Die Geschwindigkeitsregelanlage passt somit das Motormoment an, um eine vorgegebene Wunschgeschwindigkeit des Fahrers einzuhalten, oder leitet alternativ eine Bremswirkung bei Bergabfahrten ein, bei denen das Fahrzeug aufgrund seines eigenen Gewichts beschleunigt. Aus der EP 1 288 056 B1 ist insbesondere ein Verfahren zur Steuerung der Fahrzeuggeschwindigkeit in Kombination mit einer solchen Bremsomat- und/oder Tempomateinrichtung offenbart, wobei die Bremsomat-Sollgeschwindigkeit und/oder die Tempomat-Sollgeschwindigkeit dynamisch in Abhängigkeit von beispielsweise Topographiedaten verändert wird. Dadurch kann die kraftstoffsparende Wirkung derartiger Tempomaten weiter verbessert werden.

Die WO 2014/045020 offenbart eine Schnittstelle zu einem Geschwindigkeitsbegrenzungssystem eines Fahrzeugs. Die Schnittstelle umfasst eine Einrichtung die ein Signal das die Fahrzeuggeschwindigkeit kennzeichnet für das Geschwindigkeitsbegrenzungssystem bereitstellt. Außerdem umfasst die Schnittstelle eine Anzeige die angibt, dass das Geschwindigkeitsbegrenzungssystem mit der begrenzten Geschwindigkeit in Betrieb ist.

Die DE 10 2005 052 032 A1 zeigt eine Vorrichtung zur Beeinflussung der Längsgeschwindigkeit eines Kraftfahrzeugs, mit einer Sensoreinrichtung zur Messung des Abstands zu einem vorausfahrenden Fahrzeug und einer Begrenzungseinrichtung, die überlagernd zu Aktionen des Fahrers oder eines automatischen Längsführungssystems in das Antriebssystem und/oder Bremssystem des Fahrzeugs eingreift, um den Abstand auf einem bestimmten Mindestabstand und/oder die Fahrgeschwindigkeit auf eine bestimmte Maximalgeschwindigkeit zu begrenzen. Eine Aktivierungseinrichtung erkennt mindestens einen vordefinierten Fahrzustand und aktiviert die Begrenzungseinrichtung automatisch bei Erkennung eines solchen Zustands.

Die DE 10 2011 113 909 A1 offenbart ein Verfahren und eine Vorrichtung zur Geschwindigkeitsbegrenzung eines Fahrzeugs, bei denen die Geschwindigkeit des Fahrzeugs in Abhängigkeit von einer Position des Fahrzeugs auf eine Grenzgeschwindigkeit begrenzt wird. Dazu wird ein Geschwindigkeits-Toleranzbereich vorgegeben und eine Fahrpedalauslenkungs-Geschwindigkeitskennlinie derart modifiziert, dass das Fahrzeug bei Geschwindigkeiten innerhalb des Geschwindigkeits-Toleranzbereichs weniger empfindlich auf Fahrpedalauslenkungen reagiert.

Das Einsparpotential derartiger Tempomaten kann aber nur genutzt werden, wenn der Fahrer tatsächlich die Tempomatfunktion eingeschaltet hat und nicht im normalen Fahrpedalbetrieb fährt, d. h. die Geschwindigkeit per Fahrpedal steuert. Dies ist jedoch im europäischen Fernverkehr mit hohem Verkehrsaufkommen oftmals nicht der Fall, da zu häufig auf das Verkehrsgeschehen reagiert werden muss. Eine Tempomatregelung ist hierfür nicht sinnvoll, da der aktivierte Tempomat stets die Sollgeschwindigkeit einzuregeln versucht und sich außerdem bei einer Bremsbetätigung selbsttätig abschaltet, wonach sie wieder manuell neu aktiviert werden muss.

Weitere praktische wichtige Beispiele, bei denen Fahrer von Nutzfahrzeugen die Tempomatfunktion in der Regel nicht nutzen, sondern stattdessen den Fahrpedalbetrieb, sind Fahrten in geschwindigkeitsbegrenzten Zonen, beispielsweise in Wohngebieten oder in Ortsbereichen.

Für solche Situationen sind aus der Praxis Geschwindigkeitsbegrenzungseinrichtungen bekannt, mit denen eine Fahrzeughöchstgeschwindigkeit vorgegeben werden kann, deren Einhaltung von der Geschwindigkeitsbegrenzungseinrichtung überwacht wird. Hier kann somit im normalen Fahrpedalbetrieb, d. h. bei deaktiviertem Tempomaten, eine Fahrzeughöchstgeschwindigkeit vorgegeben werden. In diesem Betriebsmodus ist jede Fahrzeuggeschwindigkeit unterhalb der Höchstgeschwindigkeit zulässig und wird durch den Fahrer durch Betätigung des Fahrpedals gesteuert. Die Geschwindigkeitsbegrenzungseinrichtung kann beispielsweise eine Steuerung der Kraftstoffzufuhr des Fahrzeugs oder des Motormanagements beinhalten, um die Fahrzeuggeschwindigkeit unabhängig von der Fahrpedalstellung auf den festgelegten Höchstwert zu begrenzen.

Nachteilig an Fahrten im Fahrpedalbetrieb, auch mit einer Geschwindigkeitsbegrenzungseinrichtung, ist ein im Vergleich zum Tempomat-Betrieb in der Regel höherer Kraftstoffverbrauch, insbesondere dann, wenn beim Tempomat-Betrieb Topographiedaten berücksichtigt werden.

Es ist daher eine Aufgabe der Erfindung, ein Verfahren zum Betrieb eines Fahrzeugs bereitzustellen, mit dem der Kraftstoffverbrauch des Fahrzeugs auch in einem Fahrpedalbetriebsmodus, d. h. in einem Betrieb, in dem die Tempomatfunktion nicht aktiviert ist, verbessert werden kann.

Diese Aufgabe wird durch ein Verfahren zur Begrenzung einer Geschwindigkeit eines Nutzfahrzeugs im Fahrpedalbetrieb mit einer Geschwindigkeitsbegrenzungseinrichtung gemäß den Merkmalen des Hauptanspruchs gelöst. Diese Aufgabe wird ferner durch eine Geschwindigkeitsbegrenzungsvorrichtung mit den Merkmalen des nebengeordneten Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Vorstehend wurde bereits erwähnt, dass Verfahren zur Begrenzung einer Geschwindigkeit eines Nutzfahrzeugs im Fahrpedalbetrieb mit einer Geschwindigkeitsbegrenzungseinrichtung an sich aus dem Stand der Technik bekannt sind. Derartige Geschwindigkeitsbegrenzungseinrichtungen sind ausgeführt, eine Motorleistung und/oder Kraftstoffzufuhr des Nutzfahrzeugs nach Erreichen einer vorgegebenen Fahrzeughöchstgeschwindigkeit unabhängig von der Fahrpedalstellung zu verringern, sobald eine Geschwindigkeit des Nutzfahrzeugs die vorgegebene Fahrzeughöchstgeschwindigkeit überschreitet. Die Geschwindigkeitsbegrenzungseinrichtung kann somit nach der Überschreitung der vorgegebenen Fahrzeughöchstgeschwindigkeit eine eventuell verstärkte Betätigung des Gaspedals durch den Fahrer unwirksam machen.

Gemäß allgemeinen Gesichtspunkten der Erfindung werden die bekannten Verfahren derart weitergebildet, dass die von der Geschwindigkeitsbegrenzungseinrichtung eingehaltene Fahrzeughöchstgeschwindigkeit in Abhängigkeit von Topographiedaten und/oder Straßeninformationen verändert wird. Die Fahrzeughöchstgeschwindigkeit wird dabei vorzugsweise so innerhalb vorgegebener Grenzen in Abhängigkeit von Topographiedaten und/oder Stra-ßeninformationen dynamisch angepasst, dass durch eine verbesserte Ausnutzung der kinetischen und/oder potentiellen Energie des Nutzfahrzeugs eine verbrauchsoptimierte Fahrweise auf einem vorausliegenden Streckenabschnitt ermöglicht wird. Dies bietet den Vorteil eines verringerten Kraftstoffverbrauchs im Fahrpedalbetrieb.

Wie bereits vorstehend erwähnt, wird in diesem Dokument unter einem Fahrpedalbetrieb ein Betrieb des Nutzfahrzeugs verstanden, bei dem eine möglicherweise vorhandene Tempomatfunktion nicht aktiviert ist und der Fahrer die Geschwindigkeit per Fahrpedal bis zum Erreichen der vorgegebenen Fahrzeughöchstgeschwindigkeit steuern kann.

Eine bevorzugte Ausgestaltungsform sieht vor, dass die von der Geschwindigkeitsbegrenzungseinrichtung überwachte Fahrzeughöchstgeschwindigkeit vor Beginn einer vorausliegenden Steigung erhöht wird, so dass das Fahrzeug mit einem Geschwindigkeitsüberschuss in die Steigung einfährt. Dadurch kann die kinetische Energie des Fahrzeugs zur zumindest teilweisen Überwindung der Steigung gezielt genutzt werden, da der Fahrer zusätzlichen Schwung mit in die Steigung nehmen kann. Nach Einfahrt in die Steigung wird die Fahrzeughöchstgeschwindigkeit wieder zurückgesetzt, vorzugsweise auf den vorherigen Wert. Ferner kann die Fahrzeughöchstgeschwindigkeit vor Beginn einer vorausliegenden Gefällestrecke verringert werden, derart, dass das Fahrzeug mit reduzierter Geschwindigkeit an das Gefälle heranfährt. Auch dies ermöglicht eine Optimierung des Kraftstoffverbrauchs, da eine nachfolgende gefällebedingte Bremsung verzögert wird.

Gemäß der Erfindung kann der Fahrer eine Übertretung der vorgegebenen Fahrzeughöchstgeschwindigkeit durch eine sogenannte Kick-down-Betätigung des Fahrpedals erzwingen, beispielsweise zum Durchführen eines Überholvorgangs. Eine derartige Kick-down-Betätigung des Fahrpedals würde dann auch die Dauerbremse deaktivieren, falls diese zum Zeitpunkt des Kick-downs aktiviert war. Die vorgegebene Fahrzeughöchstgeschwindigkeit kann nur bis zu einem vorgegebenen Höchstwert der Fahrzeuggeschwindigkeit übertreten werden. Der vorgegebene Höchstwert der Fahrzeuggeschwindigkeit kann beispielsweise die für eine Nutzfahrzeugklasse vorgegebene gesetzliche Höchstgeschwindigkeit von z. B. 90 km/h sein, während die vorgegebene Fahrzeughöchstgeschwindigkeit der Geschwindigkeitsbegrenzungseinrichtung beispielsweise auf einen geringeren Wert von z. B. 85 km/h festgelegt sein kann.

Ferner kann die Geschwindigkeitsbegrenzungseinrichtung so ausgeführt sein, dass optional konfigurierbar ist, ob eine Übertretung der Höchstgeschwindigkeit per Kick-down des Fahrpedals überhaupt möglich sein soll. Dadurch können Fahrzeuge einer Fahrzeugflotte auf einfache Weise entsprechend den Wünschen der Spediteure eingerichtet werden.

Gemäß einem weiteren Aspekt der Erfindung kann eine Häufigkeit der Übertretung der vorgegebenen Höchstgeschwindigkeit im Fahrzeug gespeichert werden und/oder per Fernabfrage abfragbar sein. Auf diese Weise kann beispielsweise ein Spediteur nachvollziehen, z. B. per telematischer Abfrage, ob und wie oft ein Fahrer von dieser Möglichkeit Gebrauch macht.

Vorteilhafterweise werden Geschwindigkeitsübertretungen der vorgegebenen Höchstgeschwindigkeit gemäß der vorgenannten Möglichkeit der Kick-down-Betätigung des Fahrpedals, bei denen die Höchstgeschwindigkeit um mehr als einen vorbestimmten Schwellenwert überschritten wird, separat protokolliert.

Eine weitere Möglichkeit der erfindungsgemäßen Realisierung sieht vor, dass die Fahrzeughöchstgeschwindigkeit auch in Abhängigkeit von Straßeninformationen angepasst wird. Beispielsweise kann vor Beginn eines vorausliegenden Streckenabschnitts mit einer streckenspezifischen Höchstgeschwindigkeit, die unterhalb der aktuell eingestellten Fahrzeuggeschwindigkeit liegt, die vorgegebene Fahrzeughöchstgeschwindigkeit abgesenkt werden. Dadurch kann die kinetische Energie des Fahrzeugs besser ausgenutzt und die erforderliche Bremsleistung reduziert werden, da das Abbremsen bedingt durch die vorausliegende streckenspezifische niedrigere Höchstgeschwindigkeit antizipiert und zumindest teilweise durch Anpassung der Fahrzeughöchstgeschwindigkeit vermieden wird.

Ferner besteht im Rahmen der Erfindung die Möglichkeit, dass die vorgegebene Fahrzeughöchstgeschwindigkeit für den Fahrpedalbetrieb vom Fahrer nicht deaktivierbar ist. Gemäß dieser Variante kann ein Spediteur durch Vorgabe einer freiwilligen Höchstgeschwindigkeit, die niedriger sein kann als die gesetzliche Höchstgeschwindigkeit für ein Nutzfahrzeug, sicherstellen, dass seine Flotte unter Einhaltung der vorgegebenen Fahrzeughöchstgeschwindigkeit möglichst kraftstoffoptimiert betrieben wird. Ferner wird dadurch insgesamt die Fahrsicherheit erhöht, da Fahrten mit überhöhter Geschwindigkeit vermieden werden können.

Im Rahmen der Erfindung besteht ferner die Möglichkeit, einen Geschwindigkeitsverlauf des Fahrzeuges in Abhängigkeit von den Topographiedaten für eine vorausliegende Gefällestrecke, einem Fahrwiderstand des Fahrzeugs und einer aktuellen Geschwindigkeit des Fahrzeugs vorauszuberechnen. Je nach Länge und Steigung der Gefällestrecke können insbesondere schwere Nutzfahrzeuge bedingt durch die Hangabtriebskraft auch im nichtbefeuerten Betrieb stark beschleunigen. Gemäß dieser Variante erfolgt eine automatische Aktivierung einer Dauerbremse, z. B. eines Retarders, bei Fahrt auf der Gefällestrecke, falls der vorausberechnete Geschwindigkeitsverlauf ergibt, dass die Fahrzeuggeschwindigkeit länger als eine vorbestimmte Überschreitungszeitdauer durchgehend über einem vorgegebenen Höchstwert der Fahrzeuggeschwindigkeit liegt, wobei der vorgegebenen Höchstwert größer als oder gleicher der Fahrzeughöchstgeschwindigkeit der Geschwindigkeitsbegrenzungseinrichtung ist.

Dies erhöht zum einen den Komfort auf Autobahnen, weil der Fahrer gerade bei wenig Verkehr fast nicht mehr die Dauerbremsen selbst ansteuern muss, und zum anderen erhöht es die Sicherheit, weil Fahrer derartiger Nutzfahrzeuge nicht mehr mit stark überhöhter Geschwindigkeit fahren können.

Die Vorausberechnung des Geschwindigkeitsverlaufs des Fahrzeuges erfolgt beispielsweise unter Verwendung eines Fahrzeugmodells, das die Fahrwiderstände des Fahrzeugs bzw. ein Beschleunigungsverhalten des Fahrzeugs im nichtbefeuerten Betrieb in Abhängigkeit von der Topographie der Fahrtroute ausgehend von der aktuellen Geschwindigkeit angibt. Das hierzu verwendete Fahrzeugmodell, kann beliebig detailliert sein. Voraussetzung ist jedoch, dass die Auswirkung der Topographie, also der Steigung auf die Fahrzeugbeschleunigung separat berücksichtigt ist. Alle anderen Fahrwiderstände, wie Luftwiderstand, Rollwiderstand und Triebstrangverluste etc. können einzeln oder zusammengefasst verwendet werden. Typischerweise werden hier parametrierte Werte verwendet, welche dann über Adaptionsalgorithmen dem tatsächlichen Fahrzeugverhalten angepasst werden. Triebstrangverluste durch Nebenverbraucher werden soweit bekannt direkt berücksichtigt. Das Fahrzeugmodell kann in Form einer Beschleunigungsfunktion oder in Form einer Kennlinie in der Geschwindigkeitsregelanlage hinterlegt sein.

Gemäß einem weiteren Ausführungsbeispiel wird eine Bremsgeschwindigkeitsregelung (Bremsomat) auch im Fahrpedalbetrieb eingesetzt, die über eine Bremseinrichtung des Fahrzeugs das Überschreiten einer zweiten Höchstgeschwindigkeit verhindert. Die zweite Höchstgeschwindigkeit ist größer als oder gleich der Fahrzeughöchstgeschwindigkeit. Gemäß einer vorteilhaften Variante wird die zweite Höchstgeschwindigkeit in einem Endbereich einer Gefällestrecke erhöht, um das Einsetzen eines Motorzugbetriebes durch Ausnutzen der kinetischen und potentiellen Energie des Fahrzeugs zu verzögern.

Die vorgenannten Topographiedaten und/oder Verkehrsinformationen können beispielsweise von einem Navigationssystem oder von einer Topographiedaten-Speichereinrichtung bereitgestellt werden. Die Topographiedaten der jeweiligen Fahrtroute können als relative Höheninformation oder als Steigungs/Gefälle-Information gespeichert werden.

Ein weiterer Aspekt der Erfindung betrifft eine Geschwindigkeitsbegrenzungseinrichtung für ein Nutzfahrzeug, die ausgeführt ist, das Verfahren gemäß einem der vorhergehenden Ansprüche durchzuführen. Gemäß allgemeinen Gesichtspunkten der Erfindung werden die aus dem Stand der Technik bekannten Geschwindigkeitsbegrenzungseinrichtungen zur Begrenzung einer Geschwindigkeit eines Nutzfahrzeugs im Fahrpedalbetrieb dadurch weitergebildet, dass die von der Geschwindigkeitsbegrenzungseinrichtung eingehaltene Fahrzeughöchstgeschwindigkeit in Abhängigkeit von Topographiedaten und/oder Straßeninformationen verändert wird. Zur Vermeidung von Wiederholungen sollen rein verfahrensgemäß offenbarte Merkmale auch als vorrichtungsgemäß offenbart gelten und beanspruchbar sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockdiagramm einer Geschwindigkeitsbegrenzungseinrichtung gemäß einer Ausgestaltungsform der Erfindung; und
- Figur 2: die Anpassung der Fahrzeughöchstgeschwindigkeit in Abhängigkeit von Topographiedaten.

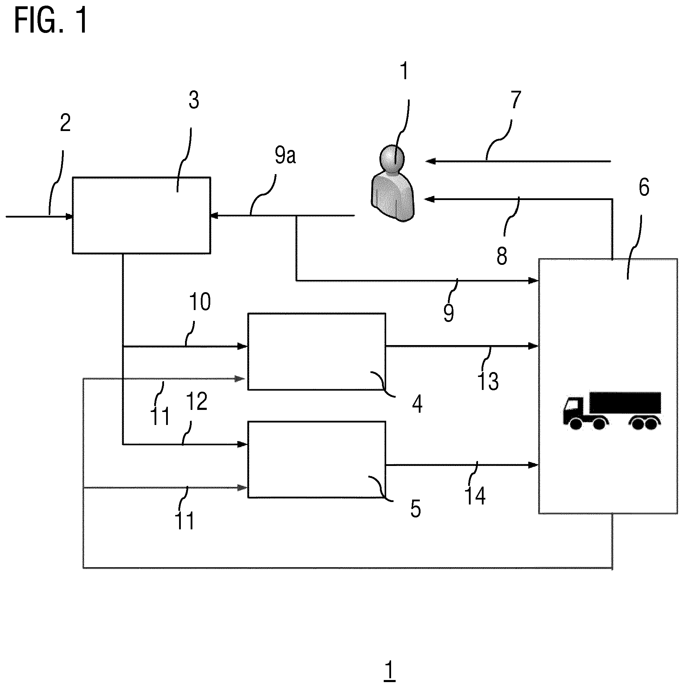

Figur 1 zeigt ein stark schematisiertes Blockdiagramm zur Illustration einer Ausgestaltungsform der Erfindung. Es wird ein Fahrpedalbetrieb eines Nutzfahrzeugs beschrieben. In diesem Betriebsmodus steuert der Fahrzeugfahrer 1 die Fahrzeuggeschwindigkeit durch Betätigen des Fahrpedals, d. h. eine möglicherweise vorhandene Tempomatfunktion ist nicht aktiviert. Mit dem Bezugszeichen 8 sind Fahrzeugzustandsinformationen schematisch gekennzeichnet, beispielsweise Geschwindigkeitsinformationen, Drehzahlinformationen etc., die dem Fahrer 1 im Fahrerhaus zur Verfügung gestellt werden und das Fahrverhalten des Fahrers 1, insbesondere die Fahrpedalbetätigung, beeinflussen. Eine weitere beispielhafte Einflussgröße für das Fahrverhalten des Fahrers stellt die aktuelle Verkehrssituation dar, die mit dem Bezugszeichen 7 schematisch gekennzeichnet ist.

Der Fahrpedalweg wird in eine entsprechende Motormomentanforderung 9 übersetzt und an die Motor- und Bremssteuerung 6 weitergeleitet. Der aktuelle Fahrpedalweg oder eine damit in Zusammenhang stehende Größe 9a wird ferner auch an eine zentrale Steuereinheit 3 der Geschwindigkeitsbegrenzungseinrichtung weitergeleitet.

Die zentrale Steuereinheit 3 gibt eine vorab festgelegte, aber einstellbare Fahrzeughöchstgeschwindigkeit 10 vor. Vorliegend ist diese lediglich beispielshaft auf einen Wert von 85 km/h eingestellt. Die Fahrzeughöchstgeschwindigkeit für die Geschwindigkeitsbegrenzungseinrichtung kann beispielsweise auf einen Wert unterhalb der gesetzlichen Höchstgeschwindigkeit für Nutzfahrzeuge festgelegt werden, wenn der Spediteur einen besonders verbrauchsreduzierten Betrieb seiner Flotte oder eines bestimmten Fahrzeugs wünscht.

Die zentrale Steuereinheit 3 übermittelt den aktuellen Wert für die Höchstgeschwindigkeit 10 an einen an sich bekannten Geschwindigkeitsbegrenzer 4, der ausgeführt ist, eine Motorleistung des Nutzfahrzeugs nach Erreichen der vorgegebenen Fahrzeughöchstgeschwindigkeit 10 unabhängig von der Fahrpedalstellung zu verringern, sobald eine Ist-Geschwindigkeit des Nutzfahrzeugs die vorgegebene Fahrzeughöchstgeschwindigkeit 10 überschreitet.

Hierzu vergleicht der Geschwindigkeitsbegrenzer 4 fortlaufend eine eingangsseitig empfangene aktuelle Ist-Geschwindigkeit 11 des Fahrzeugs mit der aktuellen Höchstgeschwindigkeit 10. Überschreitet die aktuelle Ist-Geschwindigkeit 11 den Wert der Höchstgeschwindigkeit 10, gibt der Geschwindigkeitsbegrenzer 4 ein Motormoment-Limit-Signal aus, das an eine Motor- und Bremssteuerung 6 gesendet wird.

Die Motor- und Bremssteuerung 6 empfängt ferner fortlaufend eine Motormomentanforderung 9, die aus einem Fahrpedalweg ermittelt wird, die aus der aktuellen Fahrpedalbetätigung des Fahrers 1 resultiert. Versucht somit der Fahrer das Fahrzeug nach Erreichen der Fahrzeughöchstgeschwindigkeit 10 weiter zu beschleunigen, wird die entsprechende Motormomentanforderung 9 durch das Limit-Signal 13 des Geschwindigkeitsbegrenzers 4 minimiert, so dass das Motormoment und damit die Fahrzeuggeschwindigkeit nicht weiter erhöht wird, unabhängig von der Fahrpedalbetätigung des Fahrers.

Für den Fahrpedalbetrieb wird gemäß dieser Ausführungsform der Erfindung trotz deaktivierter Tempomatfunktion eine an sich bekannte Bremsomatfunktion (Bremsgeschwindigkeitsregler 5) eingesetzt. Der Bremsgeschwindigkeitsregler 5 regelt über eine Bremseinrichtung des Fahrzeugs die Fahrzeuggeschwindigkeit so, dass eine zweite Höchstgeschwindigkeit 12, die über der vorstehend genannten Fahrzeughöchstgeschwindigkeit 10 des Geschwindigkeitsbegrenzer 4 liegt, nicht überschritten wird. Dadurch kann verhindert werden, dass Fahrzeuge, insbesondere schwere Nutzfahrzeuge, bei Fahrten auf Gefällestrecken auch ohne Kraftstoffzufuhr, d. h. im nicht befeuerten Betrieb, durch den Hangabtrieb zu weit über die Fahrzeughöchstgeschwindigkeit hinaus beschleunigen.

Der Bremsgeschwindigkeitsregler 5 empfängt hierzu ebenfalls von der zentralen Steuereinheit 3 einen aktuellen Wert für die zweite Höchstgeschwindigkeit 12 sowie den Wert der aktuellen Ist-Geschwindigkeit 11 des Fahrzeugs. Überschreitet der aktuelle Wert der Ist-Geschwindigkeit 11 des Fahrzeugs den aktuellen Wert für die zweite Höchstgeschwindigkeit 12, gibt der Bremsgeschwindigkeitsregler 5 ein entsprechendes Bremsmoment-Stellsignal 14 aus, das eine entsprechende Betätigung einer Fahrzeugbremse, vorzugsweise einer verschleißfreien Dauerbremse, bewirkt. Erfindungsgemäß kann die Bremsomatgeschwindigkeit von der zentralen Steuerung 3 ebenfalls in Abhängigkeit von Topographiedaten und/oder Straßeninformationen angepasst werden.

Gemäß allgemeinen Gesichtspunkten der Erfindung wird die Fahrzeughöchstgeschwindigkeit 10 in Abhängigkeit von Topographiedaten und/oder Straßeninformationen zur Verbrauchsoptimierung dynamisch verändert. Auf Basis der eingestellten Fahrtroute im Navigationssystem ermittelt die zentrale Steuereinheit 3 fortlaufend die Topographiedaten 2 der vorausliegenden Fahrtroute. Derartige Topographiedaten können beispielsweise in Form von relativen Höheninformationen oder als Steigungs/Gefälle-Informationen der Steuereinheit 3 bereitgestellt werden. Stellt die zentrale Steuereinheit 3 nun anhand derartiger Topographie-Informationen fest, dass sich das Fahrzeug beispielsweise einer Steigung nähert, wird die aktuell eingestellte Fahrzeughöchstgeschwindigkeit vor Beginn der vorausliegenden Steigung kurzfristig erhöht und der erhöhte Wert an den Geschwindigkeitsbegrenzer 4 übermittelt.

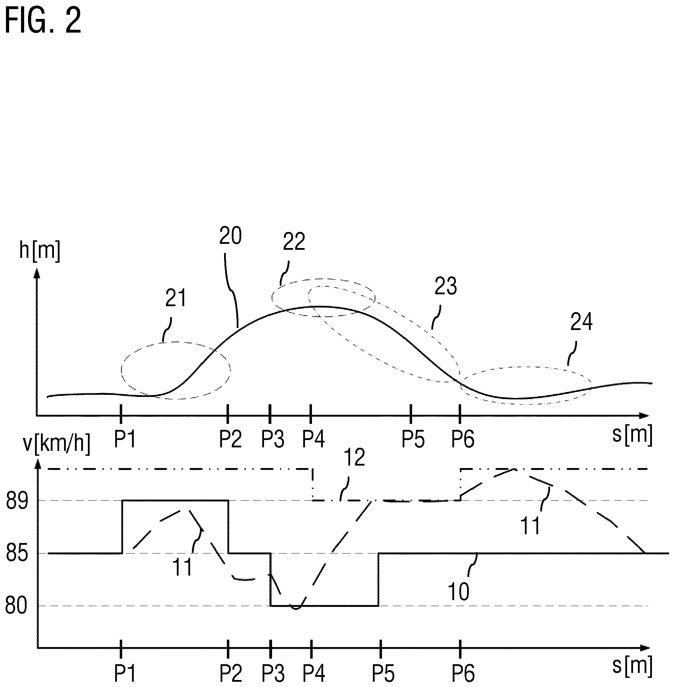

Die dynamische Anpassung der Fahrzeughöchstgeschwindigkeit 10 und der zweiten Höchstgeschwindigkeit 12 (Bremsomatgeschwindigkeit) in Abhängigkeit von Topographiedaten ist in Figur 2 beispielhaft dargestellt.

Das obere Diagramm stellt den Verlauf der vorausliegenden Fahrtroute 20 in Form einer relativen Höheninformation dar. Die gestrichelten Kreise 21, 22, 23 und 24 geben besondere Bereiche der Fahrtroute an, für die die Höchstgeschwindigkeit 10 angepasst wird. Die Kurve 10 im unteren Diagramm gibt den Verlauf der Fahrzeughöchstgeschwindigkeit 10 entlang der Fahrtroute 20 an, die Kurve 12 den Verlauf der zweiten Höchstgeschwindigkeit, auf deren Basis der Bremsomat geregelt wird, und die Kurve 11 den Verlauf der Ist-Geschwindigkeit des Nutzfahrzeugs.

Vor dem Punkt P1 fährt das Nutzfahrzeug mit der aktuell vorgegebenen Fahrzeughöchstgeschwindigkeit von 85 km/h. Der Geschwindigkeitsbegrenzer 4 sorgt dafür, dass die aktuelle Geschwindigkeit 11 diesen Grenzwert nicht überschreitet, auch wenn der Fahrer per Gaspedal mehr Motorleistung anfordert. Selbstverständlich könnte der Fahrer bei entsprechender Fahrpedalstellung auch langsamer als die Fahrzeughöchstgeschwindigkeit fahren.

Aufgrund der erhaltenen Topographie-Daten der Fahrtroute erkennt die Steuerung 3 den Beginn einer Steigung 21 auf der vorausliegenden Fahrtstrecke. Folglich erhöht die Steuerung 3 kurz vor Beginn der Steigung 21 in Punkt P1 die aktuell eingestellte Fahrzeughöchstgeschwindigkeit 10 von einem Wert von 85km/h auf einen Wert von 89km/h.

Befindet sich das Fahrpedal zu diesem Zeitpunkt in einer entsprechend weit durchgedrückten Stellung, erhöht sich nachfolgend auch die aktuelle Fahrzeuggeschwindigkeit 11 und nähert sich dem Grenzwert von 89km/h an. Dadurch kann das Fahrzeug mit einem Geschwindigkeitsüberschuss in den Steigungsbereich einfahren und die kinetische Energie des Fahrzeugs zur zumindest teilweisen Überwindung im Anfangsbereich der Steigung ausnutzen. Durch die Hangabtriebskraft in der Steigung reduziert sich nachfolgend wieder die Ist-Geschwindigkeit 11. Folglich kann die Fahrzeughöchstgeschwindigkeit 10 nach Durchfahren des Anfangsbereichs 21 der Steigung wieder auf den ursprünglichen Wert von 85km/h gesetzt werden.

Erkennt die Steuereinheit 3 den Beginn einer vorausliegenden Gefällestrecke (Bereich 22), wird die Fahrzeuggeschwindigkeit im Punkt P3 vor Beginn der vorausliegenden Gefällestrecke auf 80 km/h verringert, so dass das Fahrzeug mit reduzierter Geschwindigkeit an das Gefälle heranfährt und dadurch eine nachfolgende gefällebedingte Bremsung verzögert eingeleitet werden muss.

Nach Heruntersetzen der Fahrzeughöchstgeschwindigkeit im Punkt P3 reduziert sich somit die aktuelle Fahrzeuggeschwindigkeit 11 und nähert sich diesem neuen Grenzwert an. Nach Überschreiten der Bergkuppe im Punkt P4 nimmt die Fahrzeuggeschwindigkeit bedingt durch die Hangabtriebskraft zu und überschreitet die vom Geschwindigkeitsbegrenzer 4 überwachte Fahrzeughöchstgeschwindigkeit 10, da das Nutzfahrzeug auf der Gefällestrecke 23 auch ohne Kraftstoffzufuhr, d. h. im nicht befeuertem Betrieb, durch den Hangabtrieb beschleunigt.

Anhand der Topographiedaten erkennt die Steuerung 3 ferner, dass vorausliegend eine längere Gefällestrecke 23 ist. Im Punkt P4 wird ferner die Bremsomat-Sollgeschwindigkeit von 93km/h auf den Wert von 89km/h herabgesetzt, die Dauerbremse automatisch von der Steuerung 3 aktiviert und mittels des Bremsgeschwindigkeitsreglers 5 geregelt, um zu verhindern, dass die Fahrzeuggeschwindigkeit im nichtbefeuerten Betrieb auf der Gefällestrecke 23 die aktuell vorgegebene Bremsomat-Sollgeschwindigkeit von 89 km/h überschreitet.

Nach Durchlaufen des Anfangsbereichs 22 der Steigung wird die Fahrzeughöchstgeschwindigkeit im Punkt P5 wieder auf den ursprünglichen Wert von 85 km/h gesetzt.

Ermittelt die Steuereinheit 3 in Abhängigkeit von den empfangenen Topographiedaten 2 einen vorausliegenden Endbereich der Gefällestrecke 23, wird die aktuelle Sollgeschwindigkeit der Bremsomatfunktion 12 wieder auf den Wert von 93km/h erhöht, so dass die kinetische und potentielle Energie des Fahrzeugs ausgenutzt werden kann, um den Motorzugbetrieb in dem nachfolgendem Streckenabschnitt 24 zu verzögern.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von den Patentansprüchen Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Fahrer
- 2: Topographiedaten
- 3: Steuereinrichtung
- 4: Geschwindigkeitsbegrenzer
- 5: Bremsgeschwindigkeitsreglers
- 6: Motor- und Bremssteuerung
- 7: Verkehrsinformationen
- 8: Fahrzeugzustandsinformationen
- 9: Fahrpedalbedingte Motormomentanforderung
- 9a: Fahrpedalweg
- 10: Höchstgeschwindigkeit des Geschwindigkeitsbegrenzers
- 11: Ist-Geschwindigkeit des Fahrzeugs
- 12: Zweite Höchstgeschwindigkeit, Bremsomat-Limitgeschwindigkeit
- 13: Motormomentlimit
- 14: Bremsmoment
- 20: Relative Höhenkurve der Fahrtroute
- 21: Anfangsbereich Steigung
- 22: Anfangsbereich der Gefällestrecke
- 23: Gefällestrecke
- 24: Endbereich der Gefällestrecke

## Patentansprüche

1. Verfahren zur Begrenzung einer Geschwindigkeit (11) im Fahrpedalbetrieb eines Nutzfahrzeugs mit einer Geschwindigkeitsbegrenzungseinrichtung, die ausgeführt ist, eine Motorleistung und/oder Kraftstoffzufuhr des Nutzfahrzeugs nach Erreichen einer vorgegebenen Fahrzeughöchstgeschwindigkeit (10) unabhängig von der Fahrpedalstellung zu verringern, sobald eine Geschwindigkeit (11) des Nutzfahrzeugs die vorgegebene Fahrzeughöchstgeschwindigkeit (10) überschreitet;
wobei die vorgegebene Fahrzeughöchstgeschwindigkeit (10) in Abhängigkeit von Topographiedaten (2) und/oder Straßeninformationen verändert wird,
**dadurch gekennzeichnet, dass** eine Kick-down-Betätigung des Fahrpedals eine Übertretung der vorgegebenen Fahrzeughöchstgeschwindigkeit (10) bis zu einem vorgegebenen Höchstwert der Fahrzeuggeschwindigkeit ermöglicht.

2. Verfahren nach Anspruch 1, **dadurch gekennzeichnet, dass** die Fahrzeughöchstgeschwindigkeit (10) vor Beginn einer vorausliegenden Steigung erhöht wird, so dass das Fahrzeug mit einem Geschwindigkeitsüberschuss in die Steigung einfährt.

3. Verfahren nach Anspruch 1 oder 2, **dadurch gekennzeichnet,**
**dass** die Fahrzeughöchstgeschwindigkeit (10) vor Beginn einer vorausliegenden Gefällestrecke verringert wird, so dass das Fahrzeug mit reduzierter Geschwindigkeit an das Gefälle heranfährt.

4. Verfahren nach einem der vorhergehenden Ansprüche, **dadurch gekennzeichnet,**
a) **dass** eine Häufigkeit und/oder Dauer der Übertretung der vorgegebenen Höchstgeschwindigkeit (10) im Fahrzeug gespeichert wird und/oder per Fernabfrage abfragbar ist; und/oder
b) **dass** Geschwindigkeitsübertretungen der vorgegebenen Höchstgeschwindigkeit (10) um mehr als einen vorbestimmten Schwellenwert separat protokolliert werden.

5. Verfahren nach einem der vorhergehenden Ansprüche, **dadurch gekennzeichnet, dass** die Fahrzeughöchstgeschwindigkeit (10) derart in Abhängigkeit von Straßeninformationen angepasst wird, dass vor Beginn eines vorausliegenden Streckenabschnitts mit einer streckenspezifischen Höchstgeschwindigkeit, die unterhalb der aktuell eingestellten Fahrzeughöchstgeschwindigkeit liegt, die Fahrzeughöchstgeschwindigkeit (10) abgesenkt wird.

6. Verfahren nach einem der vorhergehenden Ansprüche, **dadurch gekennzeichnet, dass** die vorgegebene Fahrzeughöchstgeschwindigkeit (10) für den Fahrpedalbetrieb vom Fahrer nicht deaktivierbar ist.

7. Verfahren nach einem der vorhergehenden Ansprüche, **gekennzeichnet durch**
a) eine Vorausberechnung eines Geschwindigkeitsverlaufs des Fahrzeuges in Abhängigkeit von den Topographiedaten für eine vorausliegende Gefällestrecke, einem Fahrwiderstand des Fahrzeugs und einer aktuellen Geschwindigkeit des Fahrzeugs; und
b) eine automatische Aktivierung einer Dauerbremse bei Fahrt auf der Gefällestrecke, falls der vorausberechnete Geschwindigkeitsverlauf ergibt, dass die Fahrzeuggeschwindigkeit länger als eine vorbestimmte Überschreitungszeitdauer durchgehend über einem vorgegebenen Höchstwert der Fahrzeuggeschwindigkeit liegt, wobei der vorgegebenen Höchstwert größer als oder gleicher der Fahrzeughöchstgeschwindigkeit der Geschwindigkeitsbegrenzungseinrichtung ist.

8. Verfahren nach einem der vorhergehenden Ansprüche, **dadurch gekennzeichnet, dass** eine Bremsgeschwindigkeitsregelung im Fahrpedalbetrieb eingesetzt wird, die über eine Bremseinrichtung des Fahrzeugs das Überschreiten einer zweiten Höchstgeschwindigkeit (12) verhindert, wobei die zweite Höchstgeschwindigkeit größer als die oder gleich der Fahrzeughöchstgeschwindigkeit (10) ist; wobei die zweite Höchstgeschwindigkeit (12) in einem Endbereich einer Gefällestrecke erhöht wird, um das Einsetzen eines Motorzugbetriebes durch Ausnutzen der kinetischen und potentiellen Energie des Fahrzeugs zu verzögern.

9. Geschwindigkeitsbegrenzungseinrichtung (3, 4, 5) für ein Nutzfahrzeug, die ausgeführt ist, das Verfahren gemäß einem der vorhergehenden Ansprüche durchzuführen.

10. Nutzfahrzeug, mit einer Geschwindigkeitsbegrenzungseinrichtung (3, 4, 5) nach Anspruch 9.

## Claims

1. A method for limiting a speed (11) during accelerator operation of a commercial vehicle with a speed limiting device, which is designed to reduce the motor output and/or fuel supply of the commercial vehicle after reaching a prescribed maximum vehicle speed (10), independently of the position of the accelerator pedal, as soon as a speed (11) of the commercial vehicle exceeds the prescribed maximum vehicle speed (10);
wherein the prescribed maximum vehicle speed (10) is changed in accordance with topographical data (2) and/or road-related information,
**characterized in that** a kick-down actuation of the accelerator pedal allows a transgression of the prescribed maximum vehicle speed (10) up to a prescribed maximum value of the vehicle speed.

2. The method according to Claim 1, **characterized in that** the maximum vehicle speed (10) is increased before an incline lying ahead, so that the vehicle arrives at the incline with surplus speed.

3. The method according to Claim 1 or 2, **characterized in that** the maximum vehicle speed (10) is reduced before the beginning of a descending section lying ahead, so that the vehicle approaches the descent with reduced speed.

4. The method according to the preceding claim, **characterized,**
a) **in that** a frequency and/or duration of the transgression of the prescribed maximum speed (10) is stored in the vehicle and/or can be inquired by remote inquiry; and/or
b) **in that** speed transgressions of the prescribed maximum speed (10) by more than a predetermined threshold value are logged separately.

5. The method according to one of the preceding claims, **characterized in that** the maximum vehicle speed (10) is adapted in accordance with road-related information in such a way that, before a section lying ahead with a section-specific maximum speed lies below the currently set maximum vehicle speed, the maximum vehicle speed (10) is lowered.

6. The method according to one of the preceding claims, **characterized in that** the prescribed maximum vehicle speed (10) for accelerator operation cannot be deactivated by the driver.

7. The method according to one of the preceding claims, **characterized by**
a) calculation in advance of a speed profile of the vehicle in accordance with the topographic data for a descending section lying ahead, a running resistance of the vehicle and a current speed of the vehicle; and
b) automatic activation of a continuous service brake when driving on the descending section if the speed profile calculated in advance shows that the vehicle speed is continuously above a prescribed maximum value of the vehicle speed for longer than the predetermined time period for an exceedance, wherein the prescribed maximum value is greater than or equal to the maximum vehicle speed of the speed limiting device.

8. The method according to one of the preceding claims, **characterized in that** a brake speed control which by way of a braking device of the vehicle prevents the exceedance of a second maximum speed (12) is used in accelerator pedal operation, wherein the second maximum speed is greater than or equal to the maximum vehicle speed (10); wherein the second maximum speed (12) is increased in an end region of the descending section in order to delay the commencement of an traction operating mode of the engine by making use of the kinetic and potential energy of the vehicle.

9. A speed limiting device (3, 4, 5) for a commercial vehicle that is designed to carry out the method according to one of the preceding claims.

10. A commercial vehicle with a speed limiting device (3, 4, 5) according to Claim 9.

## Revendications

1. Procédé de limitation d'une vitesse (11) en mode pédale d'accélérateur d'un véhicule utilitaire équipé d'un dispositif de limitation de vitesse, qui est réalisé pour réduire une puissance de moteur et/ou une arrivée de carburant du véhicule utilitaire après avoir atteint une vitesse maximale de véhicule (10) prédéfinie indépendante de la position de pédale d'accélération dès qu'une vitesse (11) du véhicule utilitaire dépasse la vitesse maximale de véhicule (10) prédéfinie ;
la vitesse maximale de véhicule (10) prédéfinie étant modifiée en fonction de données topographiques (2) et/ou d'informations routières,
**caractérisé en ce qu'**un actionnement de rétrogradation de la pédale d'accélérateur rend possible une violation de la vitesse maximale de véhicule (10) prédéfinie jusqu'à une valeur maximale prédéfinie de la vitesse du véhicule.

2. Procédé selon la revendication 1, **caractérisé en ce que** la vitesse maximale de véhicule (10) est augmentée avant le début d'une montée à venir, de sorte que le véhicule aborde la montée avec un excédent de vitesse.

3. Procédé selon la revendication 1 ou 2, **caractérisé en ce que** la vitesse maximale de véhicule (10) est abaissée avant le début d'un trajet en descente à venir, de sorte que le véhicule s'approche de la descente avec une vitesse réduite.

4. Procédé selon l'une des revendications précédentes, **caractérisé en ce**
a) **qu'**une fréquence et/ou une durée de la violation de la vitesse maximale (10) prédéfinie est mémorisée dans le véhicule et/ou peut être consultée par interrogation à distance ; et/ou
b) **que** les violations de vitesse de la vitesse maximale (10) prédéfinie de plus d'une valeur de seuil prédéterminée sont consignées séparément.

5. Procédé selon l'une des revendications précédentes, **caractérisé en ce que** la vitesse maximale de véhicule (10) est adaptée en fonction d'informations routières de telle sorte qu'avant le début d'un tronçon de trajet à venir ayant une vitesse maximale spécifique au trajet qui est inférieure à la vitesse maximale de véhicule actuellement réglée, la vitesse maximale de véhicule (10) est abaissée.

6. Procédé selon l'une des revendications précédentes, **caractérisé en ce que** la vitesse maximale de véhicule (10) prédéfinie ne peut pas être désactivée par le conducteur pour le mode pédale d'accélérateur.

7. Procédé selon l'une des revendications précédentes, **caractérisé par**
a) un calcul préalable d'une courbe de vitesse du véhicule en fonction des données topographiques pour un trajet en pente à venir, d'une résistance à l'avancement du véhicule et d'une vitesse actuelle du véhicule ; et
b) une activation automatique d'un frein permanent lors d'un déplacement sur le trajet en pente si la courbe de vitesse calculée préalablement a pour résultat que la vitesse de véhicule est constamment au-dessus d'une valeur maximale prédéfinie de la vitesse de véhicule pendant plus longtemps qu'une durée de dépassement prédéterminée, la valeur maximale prédéfinie étant égale ou supérieure à la vitesse maximale de véhicule du dispositif de limitation de vitesse.

8. Procédé selon l'une des revendications précédentes, **caractérisé en ce qu'**une régulation de vitesse de freinage est mise en œuvre en mode pédale d'accélérateur, laquelle empêche, par le biais d'un dispositif de freinage du véhicule, le dépassement d'une deuxième vitesse maximale (12), la deuxième vitesse maximale étant supérieure ou égale à la vitesse maximale de véhicule (10) ; la deuxième vitesse maximale (12) étant augmentée dans une zone finale d'un trajet en pente afin de retarder la mise en œuvre d'un régime de traction du moteur par l'exploitation de l'énergie cinétique et potentielle du véhicule.

9. Dispositif de limitation de vitesse (3, 4, 5) pour un véhicule utilitaire, qui est réalisé pour mettre en œuvre le procédé selon l'une des revendications précédentes.

10. Véhicule utilitaire, comprenant un dispositif de limitation de vitesse (3, 4, 5) selon la revendication 9.
